# EUROPEAN PATENT APPLICATION

(11) **EP 4 592 262 A1**
(43) Date of publication of application: **30.07.2025**
(21) Application number: 24154491.5
(22) Date of filing: 29.01.2024
(51) Int. Cl.: C04B 2/06, C04B 40/00

(54) **CALCIUM HYDROXIDE SLURRY WITH NEWTONIAN RHEOLOGY**

(71) Applicant: S.A. LHOIST RECHERCHE ET DEVELOPPEMENT, 1342 Ottignies-Louvain-la-Neuve (BE)
(72) Inventor: GÄRTNER, Robert S., 1501 Buizingen (BE); TABATABAI S., Assiyeh A., 1190 Forest (BE); DEGREVE, Christopher, 7110 Maurage (BE)
(74) Representative: Calysta NV

(57) **Abstract**

The present invention relates to a concentrated and fine milk of lime having Newtonian rheology. The present invention also relates to a process for manufacturing a concentrated and fine milk of lime having Newtonian rheology. The present invention concerns an utilization of said milk of lime according to the present invention.

## Description

The present invention relates to a concentrated and fine milk of lime having Newtonian rheology. This milk of lime can be used for the treatment of water and/or sludge, neutralization of acidic waste, pH adjustment in chemical and nonferrous metal industries, paper and PCC industries, depolluting acid flue gases. Milk of lime can also be used in civil engineering, or in the building or agriculture sectors.

More particularly, the present invention concerns a milk of lime comprising an amount of solid content of fine lime particles higher or equal to 15 wt% based on weight of the milk of lime, in an aqueous phase.

The present invention also relates to a process for manufacturing a concentrated and fine milk of lime having Newtonian rheology.

The present invention concerns an utilization of said milk of lime according to the present invention.

High-reactive, concentrated, ready-to-use milk of lime or lime slurry (like Neutralac^{®}SLS45) has become the reagent of choice for many applications in the aforementioned industries.

Next to the high reactivity, concentrated solid content (higher or equal to 15 wt%) and improved rheological properties, the customers also appreciate a milk of lime with a low viscosity, a low settling rate and an extended shelf-life, further improving said rheological properties.

Standard milk-of-lime produced either by slaking of quicklime or slurrying "dry" hydrated lime powder are generally concentrated in term of solid content with fine particles below 50 wt%, more likely around 30 - 40 wt%, and having a dissolution reactivity value t90 of 3 to 30 sec according to EN12485, but unfortunately, they have a viscosity around 300 mPa.s to 1500 mPa.s and settle within a day, thereby having a reduced shelf life.

Concentrated and highly concentrated suspensions regarding their solid content cannot be industrially produced by direct slaking of quicklime, as the exothermic reaction of quicklime slaking will let the suspension boil, creating thus highly unstable and even hazardous reaction conditions. Conventional cooling is typically not efficient to reduce the reaction temperature below the boiling point. Either the quicklime has to be partially pre-hydrated or the quicklime mixed with hydrated lime, see for example WO2016/041643 or WO2022/234008 (either in the form of lime slurry or dry hydrate) to achieve concentrated and/or highly concentrated solids content. In practice, this is rarely done due to the relative complexity of the process compared to slurrying.

Regarding slurrying dry hydrated lime to achieve concentrated or highly concentrated in term of solid content, for example a solid content higher or equal to 15 wt%, and having fine particles, the viscosity of such suspensions tends to be quite high, aggravated by the shear thinning & thixotropic rheology of concentrated lime slurry. Additionally, the viscosity of lime slurry is typically instable, i.e. increasing over time. This effect can be so severe, that well-flowable lime slurry can turn into a thick paste within days or even just hours. It is known that the viscosity can be reduced by polymeric dispersants, typically polycarboxylate dispersants, especially polycarboxylate-polyether comb copolymer (PCE) dispersants, in which typically the polycarboxylate backbone is modified by polyether comb side chains, often in a comb co-polymer structure, see e.g. US2014/0140907.

However these dispersants typically do not prevent a viscosity increase to a paste-like state over time. For stabilizing viscosity over time, it is further known to add poly-alcohol additives, notably carbohydrates, including mono-, di-, oligo- and poly-saccharides, hydrogenated saccharides or sugar alcohols, sugar acids, e.g. so-called aldonic or uronic acids, such as e.g. gluconic acid or glucuronic acid, or their respective salts, or functionalized saccharides, such as N-acetyl-glucosamine or D-glucosamine, either alone, see e.g. WO2007/11040, or in combination with a polycarboxylate dispersant, see e.g. WO2006/050557 giving an additional benefit of reducing the viscosity.

Furthermore, it is known from the state of the art and particularly from document WO2020/094607 that the combination of carbohydrate additive, notably sucrose, and a polycarboxylate-polyether comb copolymer dispersant such as certain Rheosperse dispersants available from Coatex SAS, can achieve low viscosity and limited viscosity increase over time, i.e. 14 days of storage under intermittent agitation (5min/h), even for a milk of lime, with low particle size.

Moreover, document WO2022/234008 is also known from the state of the art and discloses a milk of lime having a low particle size with a combination of carbohydrate stabilizer and a polymer dispersant such as Chryso Neomere^{®} Tech 646 for 45 wt% of solid content, this milk of lime can achieve a low viscosity around 45 mPa.s stable at 28 days (see Example 3).

Unfortunately, the milk of lime disclosed in the prior art would benefit from improvement.

Indeed, calcium hydroxide slurries are characterized by their dry solid content (wt%) and fineness (fine particle size distribution under the notation d₅₀ and/or d₉₈). Increase in dry solid contents brings significant economic advantages, particularly in terms of transport and handling costs. Furthermore, the selection of the particle size distribution allows for several benefits in industrial applications (fast dissolution, higher effectiveness of certain industrial reactions and lower settling).

As above explained, when the solids content and particle size distribution are selected/engineered, the viscosity of the slurry must be corrected using additives/stabilizers because milks of lime are non-Newtonian fluids having variable viscosity dependent of stress. More precisely, calcium hydroxide slurries are shear-thinning or pseudoplastic fluids that can also exhibit thixotropy, especially at high solid contents and fine particle sizes. As clearly explained in cited documents, dispersants/additives/stabilizers improve the dispersion state of calcium hydroxide particles and induce a decrease in viscosity.

The shear thinning behavior imposes challenges in handling said milks of lime, as the higher viscosity (typically by a factor of magnitude x10) in the resting state forces users/customers/manipulators to either maintain constant agitation in storage containers and constant circulation in dosing and distribution lines or face very high resistance, when restarting said agitation or circulation. This leads to significantly increased power consumption, over-dimensioned and thus more costly pumps, agitation motors and similar equipment. Despite the high viscosity at the resting state, the suspension is still susceptible to settle generally within a day, forming sedimentary deposits of increased solid content and resultingly also increased viscosity. The shear thinning nature will further increase the viscosity of such sediments at resting state, leading to pasty sediments and deposits in poorly agitated sections of transport or storage containers or piping or similar equipment. Such thickened deposits impede operation, leading to reduced flow rates from or even complete blocking of dosing and transfer lines as well as outlets of said transport and storage containers. Unfortunately, cleaning and/or removal of said deposits and settlings is typically onerous, requires special equipment and incurs notable costs, what needs to be improved.

Additionally, this non-Newtonian rheology of conventional milk of limes provides notable challenges to the operators of storage and dosing installations. For example, milks of lime might very often (in a typical storage tank with the stirrer's impeller positioned close to the bottom outlet) not show any movement on the surface of the milk of lime during agitation. It is thus often difficult to impossible to homogenize the whole tank volume by agitation or even to evaluate visually, whether the agitation is sufficient to fluidize the milk of lime for distribution from the tank and for dosing into the application.

Another challenge to be solved is the pumping of the milk of lime from said storage tank. As the product will be massively reduced in viscosity by the shearing action of the pump, the viscosity of the milk of lime in the pump and at its outlet will be much lower than the one at the inlet. This can lead to the milk of lime exiting the pump at a faster rate than it is entering, risking cavitation and damage to the pump.

Conventional solutions, as previously explained from the state of the art, could be adding copious amounts of additives/dispersants/stabilizers and moreover combinations of them to reduce viscosity, but as a milk of lime with low viscosity could massively facilitate and accelerate settling, such a product becomes unmanageable, as it becomes challenging to keep the particles in suspensions and requires regular or constant agitation and homogenization. For example, as disclosed in WO2022/234008, the combination of dispersant and carbohydrate stabilizer provide a low viscosity but requires homogenization before the measurement. More particular, the principle of homogenization is to re-mix the settled/sediment deposits and also reduce the clear supernatant in order to provide a milk of lime homogenized in its entire volume.

As said, although these milks of lime have many advantages, they need to be mixed regularly or constantly agitated and homogenized, and even more so when we consider the large storage tanks, pumps and transport solutions of industrial scale applications.

There is therefore a need to provide a milk of lime which endeavors to solve at least a part of these drawbacks.

There is a need to provide a milk of lime which manages to combine two contradictory and opposite worlds as abovementioned, namely a milk of lime having :
- A low and reduced settling over time, vastly reducing the risk of cavitation in pumps as well as the need for constant agitation in tanks and circulation in dosing and transfer lines, and facilitate/reduce the need of homogenization or cleaning of deposits, and
- A very low viscosity over time and under stress, in order to be easily managed.

Moreover, there is a need to provide a concentrated and fine milk of lime having a least a reduction, preferably high reduction of the inhomogeneity of the slurry regarding settling, deposits and clear supernatant under extended storage.

Finally, there is a need to provide a milk of lime which facilitates manipulation, storage, pumping, dosing as well as the emptying and cleaning of tanks and lines, in order to save time and costs in processes using said milk of lime.

To solve these problems, it is provided according to the present invention, a milk of lime as previously presented, said milk of lime comprising at least a polymer dispersant present at an amount of 1.0 to 4.0 wt% of active polymer dispersant relative to said total dry solid content of said milk of lime, wherein said milk of lime produces a decantation measured during 28 days of less than 5 wt% bottom solid residues and less than 2 vol% clear supernatant, and wherein said milk of lime stored at rest presents a Newtonian rheology with a viscosity lower than 200 mPa.s measured with a Brookfield DV-3 Rheometer at a rotation speed of 100 rpm using spindle 62 at room temperature of ca. 20°C and having less or maximally 50% change in viscosity over the range of 10 to 100 s-¹ shear rate, measured with an Anton-Paar MCR102 Rheometer with a cup & cylinder geometry.

Measurements of particle size distribution according to the present invention are expressed in volume, for example d₅₀ is the diameter for which 50%vol of particles are smaller, d₉₀ is the particle diameter for which 90%vol are smaller.

According to the present invention, Anton Paar MCR102 Rheometer is using cup & cylinder geometry.

In another embodiment of the present invention, Anton Paar MCR102 Rheometer is using cone & plate geometry or cup & vane geometry.

Measurement of viscosity over a range of shear rates (i.e. from 1 s-1 to 100 s-1) are done with an Anton Paar MCR102 Rheometer using cone & plate geometry or cup & cylinder geometry or cup & vane geometry.

Measurement of viscosity at 100 rpm are done using a Brookfield DV-3 Rheometer with spindle 63 if, viscosity is > 300 cP, or with spindle 62, if viscosity is < 300 cP.

According to the present invention, measuring the height (& thus volume for a bottle with constant diameter) of clear supernatant on a 1 liter/dm³ bottle of ca. 18cm liquid height. It is found that this surprisingly corresponds reasonably well to the level of clear supernatant on a 1m³ IBC of ca. 1m liquid height.

As can be seen, the milk of lime of the present invention is characterized by the combination of :
- its amount of dry solid content of fine lime particles higher or equal to 15 wt% based on weight of the milk of lime,
- at least a polymer dispersant present at an amount of 1.0 to 4.0 wt% of active polymer dispersant based on weight of said total solid dry content of said milk of lime,
- preferably a particle size distribution with a characteristic diameter d₅₀ comprised between 1.0 and 3.5 µm,
- preferably a particle size distribution with a characteristic diameter d₉₈ lower than or equal to 25 µm,
allowing according to the milk of lime of the present invention achieving a production of decantation measured during 28 days of less than 5 wt% bottom solid residues (deposits) and of less than 2 vol% clear supernatant (during 28 days).

Moreover, and even more surprisingly, the inventors have succeeded to provide a milk of lime stored at rest presenting a Newtonian or quasi-Newtonian rheology with a viscosity lower than 200 mPa.s measured with a Brookfield DV-3 Rheometer at a rotation speed of 100 rpm using spindle 62 at room temperature of ca. 20°C and having less or maximally 50% change in viscosity over the range of 10 to 100 s-¹ shear rate measured with an Anton-Paar MCR102 Rheometer with a cup & cylinder geometry, contrary to the non-Newtonian rheology conventional for the milks of lime in the state of the art which presents higher changes in viscosity over time or over the range of 10 to 100 s-¹ shear rate, and more specifically more than 50% change in viscosity.

By the terms Newtonian or quasi-Newtonian rheology, it is understood by the present invention, that viscosity is constant versus shear rate and shear stress (Newtonian) or viscosity does not deviate by more than 50% versus shear rate and shear stress (quasi-Newtonian).

The milk of lime of the present invention, thus presents the advantages to have a stable and very low viscosity at resting state as well as at different agitation and pumping rates, in combination with the Newtonian or quasi-Newtonian rheology, allowing to the milk of lime of the present invention to at least vastly reduce, or even eliminate, the risk of cavitation in pumps, the need of constant agitation in tanks or circulation in dosing and transfer lines, and facilitate homogenization by tank agitation.

Furthermore, the milk of lime of the invention, having a decantation measured during 28 days of less than 5 wt% bottom solid residues (deposits) and of less than 2 vol% clear supernatant (during 28 days), presents the advantage to alleviate the issues with deposits formed by sedimentation, as the viscosity of such deposits will no further increase at a resting state.

More surprisingly, the inventors have succeeded to provide a milk of lime of the invention, with the Newtonian or quasi-Newtonian rheology, resulting in at least massive reduction, or even elimination, of sedimentation, settling, deposits of solid residues in the bottom of said milk of lime, by this, the risk of blockage by such deposits is not only massively reduced or even eliminated, but also only a minimal, or even no clear supernatant is caused by sedimentation, the need for homogenization by mixing is massively reduced or eliminated as well. This is especially beneficial, if a large number of containers, typically industrial bulk containers, IBCs, or tanker trucks are used for transport, for which rehomogenization would be labor intensive and often challenging to perform due to the need to laboriously install and remove the mixing equipment on/from each container, and unfavorable geometry and/or lack of a suitable agitation equipment.

By this, the milk of lime according to the present invention also reduces the need for cleaning such deposits and sediments, which is significantly time and cost saving.

Other embodiments of said milk of lime according to the invention are mentioned below.

In a preferred embodiment of said milk of lime according of the present invention, said at least a polymer dispersant is present at an amount of 1.1 to 3.9 wt% of active polymer dispersant relative to said total dry solid content of said milk of lime, preferably present at an amount of 1.2 to 3.8 wt%, more preferably present at an amount of 1.3 to 3.7 wt%, even more preferably present at an amount of 1.4 to 3.6 wt%, in particular present at an amount of 1.5 to 3.5 wt%, for example present at an amount of 1.5 to 3.4 wt%, advantageously present at an amount of 1.5 to 3.3 wt%, more advantageously present at an amount of 1.5 to 3.2 wt%, even more advantageously present at an amount of 1.5 to 3.1 wt%, preferably present at an amount of 1.5 to 3.0 wt%.

In particular, said at least a polymer dispersant is present at an amount of active polymer dispersant relative to said total dry solid content of said milk of lime of 1.6 wt%, 1.7 wt%, 1.8 wt%, 1.9 wt%, 2.0 wt%, 2.1 wt%, 2.2 wt%, 2.3 wt%, 2.4 wt%, 2.5 wt%, 2.6 wt%, 2.7 wt%, 2.8 wt%, 2.9 wt%.

Preferably, said fine lime particles of said milk of lime of the present invention have a particle size distribution with a characteristic diameter d₅₀ comprised between 1.0 and 3.5 µm as measured by laser diffraction (with a Beckman-Coulter LS13 320 equipment using methanol as carrier solvent and ultrasound sonication pretreatment 4min at 100W), advantageously between 1.0 and 3.4 µm, preferably between 1.0 and 3.3 µm, more preferably between 1.0 and 3.2 µm, even more preferably between 1.0 and 3.1 µm, in particular between 1.0 and 3.0 µm, in particular between 1.0 and 2.9 µm, preferably between 1.0 and 2.8 µm, more preferably between 1.0 and 2.7 µm, even more preferably between 1.0 and 2.6 µm, advantageously between 1.0 and 2.5 µm, more advantageously between 1.0 and 2.4 µm, even more advantageously between 1.0 and 2.3 µm, in particular between 1.0 and 2.2 µm, particularly between 1.0 and 2.1 µm, more particularly between 1.0 and 2.0 µm, for example 1.1 µm, 1.2 µm, 1.3 µm, 1.4 µm, 1.5 µm, 1.6 µm, 1.7 µm, 1.8 µm or 1.9 µm.

In a preferred embodiment, said fine lime particles of said milk of lime according to the present invention have a particle size distribution with a characteristic diameter d₉₈ lower than or equal to 25 µm as measured by laser diffraction (with a Beckman-Coulter LS13 320 equipment using methanol as carrier solvent and ultrasound sonication pretreatment 4min at 100W), preferably lower than or equal to 24 µm, more preferably lower than or equal to 23 µm, in particular lower than or equal to 22 µm, more particular lower than or equal to 21 µm, advantageously lower than or equal to 20 µm, more advantageously lower than or equal to 19 µm, preferably lower than or equal to 18 µm, more preferably lower than or equal to 17 µm, even more preferably lower than or equal to 16 µm, advantageously lower than or equal to 15 µm, more advantageously lower than or equal to 14 µm, even more advantageously lower than or equal to 13 µm, in particular lower than or equal to 12 µm, particularly lower than or equal to 11 µm, more particularly lower than or equal to 10 µm, preferably lower than or equal to 9.5 µm, more preferably lower than or equal to 9.0 µm, in particular lower than or equal to 8.5 µm, lower than or equal to 8.0 µm.

Preferentially, said fine lime particles of said milk of lime according to the present invention have a particle size distribution with a characteristic diameter d₂₅ higher than or equal to 0.4 µm when said characteristic diameter d₅₀ of said fine lime particles of said milk of lime is higher than or equal to 1.0 µm as measured by laser diffraction (with a Beckman-Coulter LS13 320 equipment using methanol as carrier solvent and ultrasound sonication pretreatment 4min at 100W).

In an advantageously embodiment, said amount of solid content of fine lime particles of said milk of lime according to the present invention is higher or equal to 20 wt% and lower or equal to 70 wt%, in particular higher or equal to 25 wt% and lower or equal to 70 wt%, more particular higher or equal to 30 wt% and lower or equal to 70 wt%, preferably higher or equal to 35 wt% and lower or equal to 65 wt%, preferably higher or equal to 40 wt% and lower or equal to 60 wt%, even more preferably higher or equal to 40 wt% and lower or equal to 55 wt%, advantageously higher or equal to 40 wt% and lower or equal to 50 wt%, for example 41 wt%, 42 wt%, 43 wt%, 44 wt%, 45 wt%, 46 wt%, 47 wt%, 48 wt%, 49 wt%.

Even more preferably, the at least one polymer dispersant in the milk of lime according to the present invention is a polycarboxylate polyether comb copolymer.

In a further embodiment, the at least one polymer dispersant in the milk of lime according to the present invention, preferably the polycarboxylate polyether comb copolymer, has a main chain containing (meth)acrylate units and lateral chains comprising oxyethylene or oxypropylene groups.

In another embodiment, it should be noted that the oxyethylene and oxypropylene groups of the copolymer side chains can be arranged randomly, on a regular basis or in a block. To be more precise, an example of polymer dispersant according to the present invention consists of methacrylic acid monomers and/or any of its salts, possibly of acrylic acid monomers and/or any of its salts, monomers with the formula (I) : R-X-R' according to which :
- R represents a polymerizable unsaturated group, notably acrylate, methacrylate, methacrylurethane, vinyl or allyl,
- R' represents hydrogen or an alkyl group with from 1 to 4 carbon atoms,
- X represents a structure with "n" unit(s) of ethylene oxide EO and "m" unit(s) of propylene oxide PO, arranged randomly or regularly,
- "m" and "n" abovementioned are 2 non-zero integers and are between 1 and 150.

Thus, an example of dispersant copolymer according to the invention has a skeleton consisting of methacrylic acid monomers, and possibly acrylic acid monomers, preferably the dispersant copolymer has a skeleton consisting of methacrylic acid monomers exclusively or has a skeleton consisting of methacrylic acid monomers and acrylic acid monomers.

For example, a suitable polymer dispersant in the milk of lime according to the present invention is Rheosperse 4050 (Coatex SAS).

In another embodiment, example of dispersant copolymer according to the invention are disclosed in document FR2776285 hereby incorporated by reference.

For example, a suitable polymer dispersant in the milk of lime according to the present invention is Neomere^{®} Tech 646 (Chryso SAS).

Another example of suitable polymer dispersant in the milk of lime according to the present invention are Neomere^{®} Tech 757 and/or Neomere^{®} Tech 868 (Chryso SAS).

Another further example of suitable polymer dispersant in the milk of lime according to the present invention is from Viscocrete family, more preferably Viscocrete 3027 (SIKA).

Preferably, said lime particles of said milk of lime according to the present invention, present a specific surface area < 12 m²/g, preferably < 10 m²/g, more preferably < 9 m²/g, ideally < 8 m²/g (as measured by a Micromeritics Tristar equipment using the BET nitrogen adsorption-desorption method as described in standard DIN 66134).

Indeed and in an preferably manner, obtaining said milk of lime according to the present invention comprising said advantageously features is difficult with lime particles presenting high specific surface area.

The objective of the milk of lime of the present invention, with said specific lime particles with specific surface area is to limit interactions between neighboring particles, which are all the more important the higher the concentration. So, if the specific surface area is high, the particles can create more interactions because the surface area available for them to be created is greater, so it is intended to prefer to use lime particles with a low specific surface area such as.

Other embodiments of the milk of lime according to the present invention are mentioned in the appended claims.

The present invention also concerns a process for manufacturing a milk of lime comprising the steps of :
- milling of lime particles, in suspension in an aqueous phase, said lime particles having an initial particle size distribution with a characteristic diameter d₉₈ lower than or equal to 200 µm, preferably lower than or equal to 150 µm, more preferably lower than or equal to 100 µm, as measured by laser diffraction (with a Beckman-Coulter LS13 320 equipment using ethanol as carrier solvent and ultrasound sonication pretreatment 4min at 100W),
- adding, in said aqueous phase, a first dose of at least a polymer dispersant at an amount of 0.2 to 4.0 wt% of active polymer dispersant based on weight of a solid content of fine lime particles,
- collecting a milk of lime comprising an amount of solid content of fine lime particles higher or equal to 15 wt% based on weight of the milk of lime, said milk of lime producing a decantation measured during 28 days of less than 5 wt% bottom solid residues and less than 2 vol% supernatant, presenting a Newtonian rheology with a viscosity lower than 200 mPa.s measured with a Brookfield DV-3 Rheometer at a rotation speed of 100 rpm using spindle 62 at room temperature of ca. 20°C and having less or maximally 50% change in viscosity over the range of 10 to 100 s-¹ shear rate measured with an Anton-Paar MCR102 Rheometer with a cup & cylinder geometry.

In a preferred embodiment, said step of milling of lime particles, in suspension in an aqueous phase, is to obtain a particle size distribution with a characteristic diameter d₅₀ comprised between 1.0 and 3.5 µm and d₉₈ lower than or equal to 25 µm.

In a preferred embodiment, the step of adding said first dose of at least a polymer dispersant in said aqueous phase of said process for manufacturing a milk of lime according to the present invention is before said step of milling said lime particles.

Preferably, said step of adding said first dose of at least a polymer dispersant in said aqueous phase of said process for manufacturing a milk of lime according to the present invention is after said step of milling said lime particles.

More preferably, said lime particles of said process for manufacturing a milk of lime according to the present invention are dry hydrate and/or wet slaked quicklime.

According to the present invention, it is understood by the terms "said lime particles of said process for manufacturing a milk of lime according to the invention are slaked quicklime" that quicklime is slaked with an excess of water to produce said milk of lime.

For example, it is intended by the present invention that both slaking as well as slurrying hydrate are viable options to produce the slurry for the milling according to the invention.

Even more preferably, of said process for manufacturing a milk of lime according to the present invention comprises an additional step of concentration of said formed milk of lime before said step of collection, preferably by filtration, high pressure filtration, centrifugation, forced and/or accelerated settling.

In another embodiment, of said process for manufacturing a milk of lime according to the present invention comprises an additional step of dispersion, in said formed milk of lime, a second dose of at least a polymer dispersant at an amount of 1.0 to 3.8 wt% of active polymer dispersant based on weight of a solid content of fine lime particles, preferably with a combination with mechanical agitation.

In a preferred embodiment of the process for manufacturing a milk of lime according the present invention, said lime particles present a specific surface area < 12 m²/g, preferably < 10 m²/g, more preferably < 9 m²/g, ideally < 8 m²/g (as measured by a Micromeritics Tristar equipment using the BET nitrogen adsorption-desorption method as described in standard DIN 66134).

In a preferred embodiment of the process for manufacturing a milk of lime according to the present invention, said fine lime particles of said formed milk of lime having a particle size distribution with a characteristic diameter d₅₀ comprised between 1.0 and 3.5 µm and d₉₈ lower than or equal to 25 µm.

Other embodiments of the process for manufacturing a milk of lime according to the present invention are mentioned in the appended claims.

The present invention further concerns an utilization of said milk of lime of the present invention or said milk of lime manufactured by the process according to the present invention, for the treatment of water, sludge, neutralization of acid waste, pH adjustment and or precipitation of solids in chemical and nonferrous metal industries, paper and PCC industries, depolluting acid flue gases, or in different applications in the building and agriculture sectors.

Other embodiments of the utilization of the milk of lime according to the present invention are mentioned in the appended claims.

Other characteristics and advantages of the present invention will be derived from the non-limitative following description, and by making reference to the examples.

### Examples. -

The particle size distribution in the following examples and comparative examples were measured with a Beckman-Coulter LS13 320 equipment using ethanol as carrier solvent and ultrasound sonication pretreatment 4min at 100W.

**Example 1.** - Preparation of a milk of lime having Newtonian rheology with a viscosity of 185 mPa.s after storage at rest, i.e under non-agitated conditions with less than 50% change over the range of 10 to 100 s-¹ shear rate and with a production of decantation measured during 28 days of less than 5 wt% bottom solid residues (deposits) and of 1.3 vol% clear supernatant (during 28 days).

A milk of lime containing 45.7 wt% of dry solid content of fine lime particles based on weight of the milk of lime, 1,67 wt% of Neomere@Tech 646 from Chryso (active polycarboxylate polyether comb copolymer as active polymer dispersant) relative to said total dry solid content of said milk of lime, with a particle size distribution with a characteristic diameter d₅₀ of 1.2 µm and d₉₈ of 6.2 µm, is prepared.

The milk of lime is prepared as follows :
286.4 g of Neomere@Tech 646 dispersant from Chryso with ca. 20 wt% active content is added to 5000 g of water and dissolved by mixing with an anchor type stirrer at 200 rpm. Then 4090 g of dry hydrated lime powder with a diameter d₅₀ of 6.1 µm and d₉₈ of 77.6 µm and a specific surface area of 9.7 m²/g (as measured by a Micromeritics Tristar equipment using the BET nitrogen adsorption-desorption method, according to DIN 66134) is added and dispersed by agitation with the same stirrer at 300 rpm during 30 min. A solid content of 45.7 wt% is measured on a Sartorius Infrared Thermobalance after drying at 110°C, until stable weight.

The obtained suspension is then milled with a Dynomill laboratory rotary bead mill of 1.4 dm³ mill chamber total volume at a rotor speed of 3600 rpm using 0.8 mm avg diameter yttrium-stabilized zircon oxide beads at a ca. 75 vol% filing level (relative to mill chamber free volume), to obtain a fineness of d₅₀ of 1.2 µm and d₉₈ of 6.2 µm - using the same equipment and procedure as described above. The obtained suspension has a viscosity of 500 mPa.s as measured with a Brookfield DV-3 Rheometer at a rotation speed of 100 rpm using spindle 63 and at room temperature of ca. 20 °C.

61.4 g of Neomere@Tech 646 dispersant from Chryso with ca. 20 wt% active dispersant content is added to the suspension under agitation with the said anchor stirrer at 300 rpm during 10 minutes.

The obtained viscosity of the obtained milk of lime according to the invention is 185 mPa.s measured with a Brookfield DV-3 Rheometer at a rotation speed of 100 rpm using spindle 62 at room temperature of ca. 20°C.

Viscosity and decantation of said milk of lime according to the present invention are monitored weekly on samples stored at rest for 28 days.

For the viscosity measurement, the sample is shaken by hand before measurement.

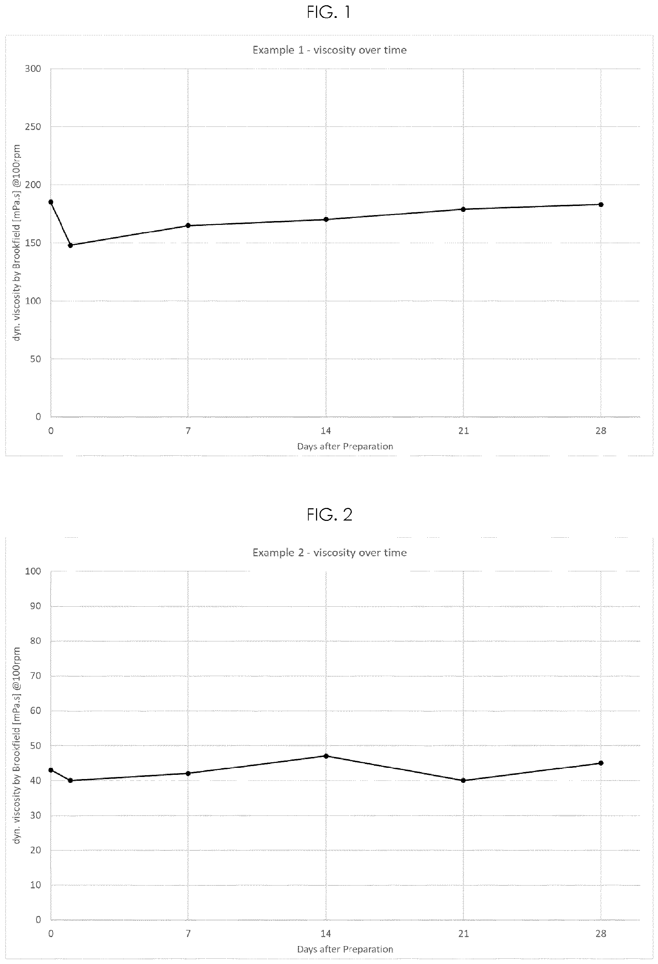

Results regarding viscosity over 28 days are given **Figure 1****.**

It is observed that the viscosity remains stable at ca. 185 mPa.s with small variations about less than 50% change over the range of 10 to 100 s-1 shear rate measured with an Anton-Paar MCR102 Rheometer with a cup & cylinder geometry. The sample for the decantation test is not moved & after 28 days only 1.3 vol%in height in clear supernatant over a sample height of ca. 16 cm is noted.

**Example 2.** - Preparation of a milk of lime having Newtonian rheology with a viscosity of 40 mPa.s with less than 50% change over the range of 10 to 100 s-¹ shear rate and with a production of decantation measured during 28 days of less than 5.0 wt% bottom solid residues (deposits) and less than 2.0 vol% clear supernatant (during 28 days).

A milk of lime containing 45.1 wt% of dry solid content of fine lime particles based on weight of the milk of lime, 1.52 wt% of Neomere@Tech 646 from Chryso (active polycarboxylate polyether comb copolymer as active polymer dispersant) relative to said total dry solid content of said milk of lime, with a particle size distribution with a characteristic diameter d₅₀ of 1.3 µm and d₉₈ of 6.7 µm, is prepared.

The milk of lime is prepared as follows :
30 kg of suspension are produced by dispersing 6 kg of the same dry hydrated lime powder (as example 1) with a diameter d₅₀ of 6.1 µm and d₉₈ of 77.6 µm in 24 kg of water under agitation with the same stirrer (as example 1) at 300 rpm during 30 min. A solid content of 20.9 wt% is measured on a Sartorius Infrared Thermobalance by drying at 110 °C, until stable weight.

The obtained suspension is then milled in two steps :
First, with a Dynomill laboratory rotary bead mill with a chamber total volume of 0.6 dm³ at a rotor speed of 1200 rpm with 1.25 mm avg diameter zircon oxide beads at ca. 75%vol filling level, and then in the 1.4 dm³ mill at 2500 rpm with 0.8 mm avg diameter zircon oxide beads at ca. 75%vol bead filling level (relative to mill chamber free volume), to obtain a fineness of d₅₀ of 1.3 µm and a d₉₈ of 10.2 µm - as measured using the same equipment & procedure as described above.

The obtained suspension has a viscosity of 1370 mPa.s as measured with a Brookfield DV-3 Rheometer at a rotation speed of 100 rpm using spindle 63 and at room temperature of ca. 20 °C.

A portion of the suspension is then concentrated by filtration on a Büchner filter to 47 wt%. 259 g of concentrated suspension are recovered from the filter and 9.3 g of Neomere^{®}tech 646 dispersant is added to the suspension under agitation by an UltraturraxT25 rotor-stator-disagglomerator from IKA GmbH for 1 min. The high shear treatment by the Ultraturrax equipment reduces the particle size to a d₅₀ of 1.3 µm & d₉₈ of 6.7 µm. The suspension is then adjusted in solid content by addition of water to 45.1 wt%.

The obtained milk of lime according to the invention has a viscosity of ca. 40 mPa.s (as measured by the Brookfield DV-3 Rheometer at a rotation speed of 100 rpm using spindle 62 at room temperature of ca. 20°C), which is monitored for 28 days and found to be stable. No notable amount of clear supernatant was observed over 28 days.

The viscosity of the obtained milk of lime according to the present invention is measured over a range of shear rates from 1 to 100 s⁻¹ with an Anton-Paar MCR102 Rheometer with a cup & cylinder geometry. It is found to be stable, i.e. Newtonian Rheology and thus not shear-thinning.

**Figure 2** represents viscosity of Example 2 over time (28 days) at 100 rpm.

**Figure 3** represents the evolution of viscosity of Example 2 versus shear rate over time.

**Figure 4** represents the evolution of viscosity of Example 2 versus shear stress over time.

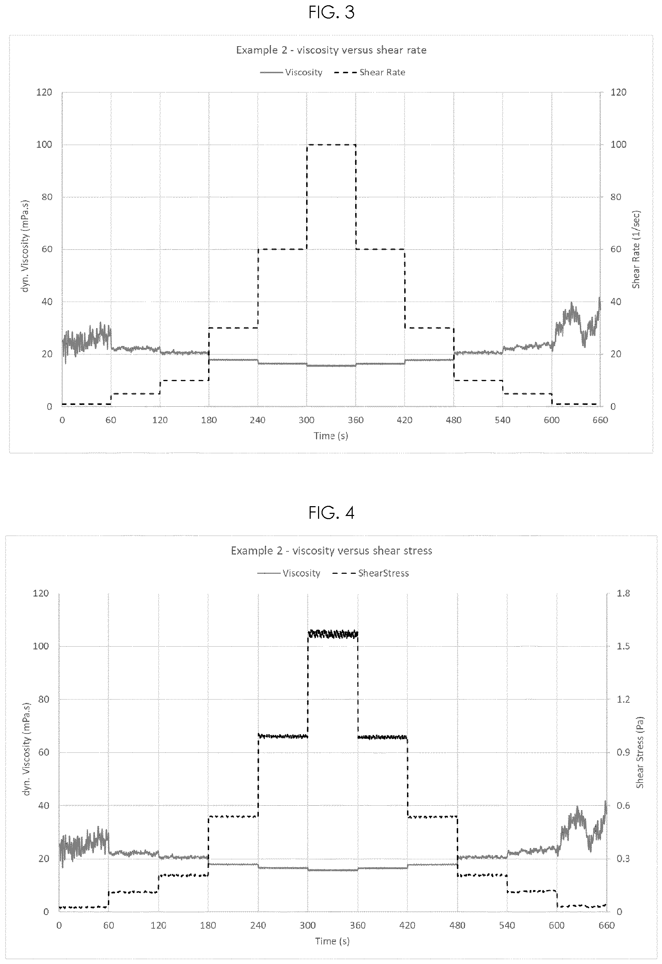

From the **Figure 3** "Example 2 - viscosity versus shear stress" and **Figure 4** "Example 2 - viscosity versus shear rate", one can observe that the step changes in shear rate or shear stress did not result in notable differences in viscosity. As a person knowledgeable in the art will appreciate, a viscosity of ca. 20cP corresponds to easy-flowing liquids and the observed differences of +/- 3cP are negligible in terms of application. We can also note that the viscosity results for a shear rate of 1 sec⁻¹ are not stable & lead to notable noise - and are not an indication of increased viscosity at this condition. The suspension thus behaves practically Newtonian.

We can also note that in "Example 2 - viscosity versus shear stress" **Figure 4****,** the dashed curve of shear stress is the result of imposing the shear rate profile, which can be seen in "Example 2 - viscosity versus shear rate" **Figure 3** on the sample. One can observe that the shear stress follows the shear rate proportionally & without delay, i.e. no shear thinning or time-dependent adaptation effects (thixotropy) can be observed - in contrast to Comparative Example 1 below. Dynamic viscosity being of course derived as shear stress divided by shear rate.

### Comparative Example 1. -

30.7 g sucrose (crystalline table sugar) is added to 5000 g of water and dissolved by mixing with an anchor type stirrer at 200 rpm. Then 4090 g of the same dry hydrated lime powder as in the previous examples 1 and 2, with a d₅₀ of 6.1 µm and a d₉₈ of 77.6 µm is added & dispersed by agitation with the same stirrer at 300 rpm during 30 min. A solid content of 45.6 wt% is measured on a Sartorius Infrared Thermobalance after drying at 110°C, until stable weight.

The obtained suspension is then milled with the aforementioned Dynomill 1.4 dm³ laboratory rotary bead mill at a rotor speed of 1200 rpm using 1.25 mm avg diameter zircon oxide beads at a ca. 60 vol% filling level (relative to mill chamber free volume), to obtain a fineness of d₅₀ of 3.5 µm and a d₉₈ of 19.3 µm - using the same equipment & procedure as described above. The obtained suspension has a viscosity of ca. 1000 mPa.s as measured with a Brookfield DV-3 Rheometer at a rotation speed of 100 rpm using spindle 63 and at room temperature of ca. 20 °C.

16.4 g of Neomere^{®}tech 646 dispersant is added to the suspension under agitation with the said anchor stirrer at 300 rpm for 10 minutes. The obtained viscosity is 82 mPa.s - same equipment & procedure as above (Brookfield DV-3 Rheometer at a rotation speed of 100 rpm using spindle 62 and at room temperature of ca. 20 °C).

Viscosity and decantation are monitored weekly on samples stored at rest for 28 days. For the viscosity measurement, the sample is shaken by hand before measurement. It is observed that the viscosity increases on the first day to 522 mPa.s and stabilizes at ca. 700 mPa.s after ca. 1 week. The sample for the decantation test is not moved at all & after 28 days 12 vol% in height in clear supernatant over a sample height of ca. 16 cm is noted.

The viscosity of this suspension is measured over a range of shear rates from 1 to 100 s⁻¹ with an Anton-Paar MCR102 Rheometer with a cup & cylinder geometry. It is found to decrease with increasing shear rate and shear stress as is typical for shear-thinning / pseudoplastic suspensions like typical lime hydrate suspensions/milks of lime according to the state of the art. While at high shear rates like 60 or 100 s⁻¹, it displays a similar viscosity level (ca. 100m Pa.s @ 100 s⁻¹) as the suspensions in Examples 1 & 2 (abovementioned), but at low to medium shear rates of 1 to 10 s⁻¹, we observe viscosities of several hundred to several thousand mPa.s. It is clearly non-Newtonian and its handling is more challenging than that of those of the Examples 1, 2 (abovementioned) & 3 (below).

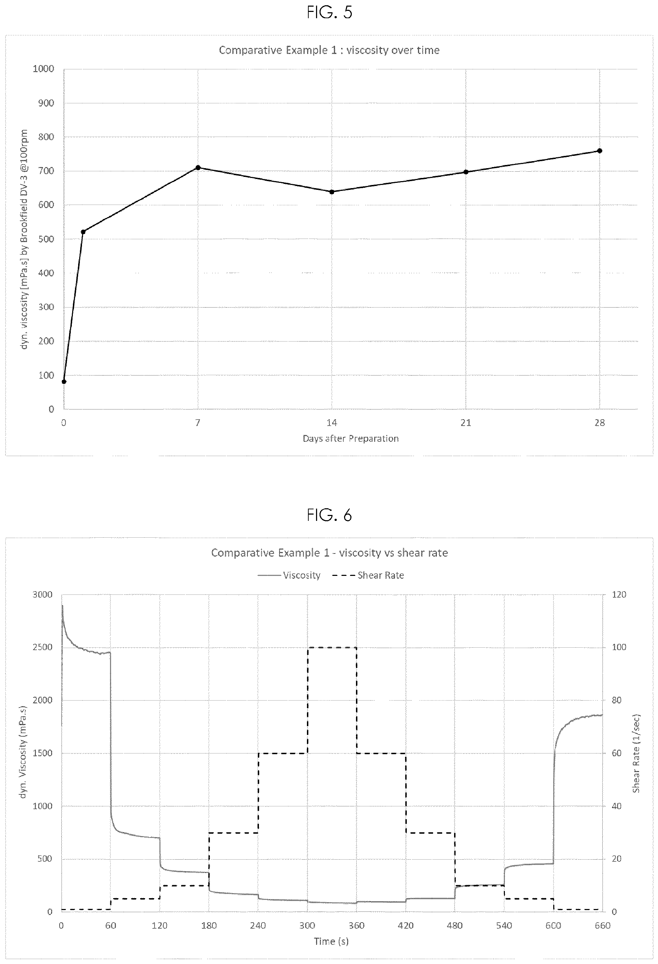

**Figure 5** represents viscosity of Comparative Example 1 over time (28 days) at 100 rpm.

**Figure 6** represents the evolution of viscosity of Comparative Example 1 versus shear rate over time.

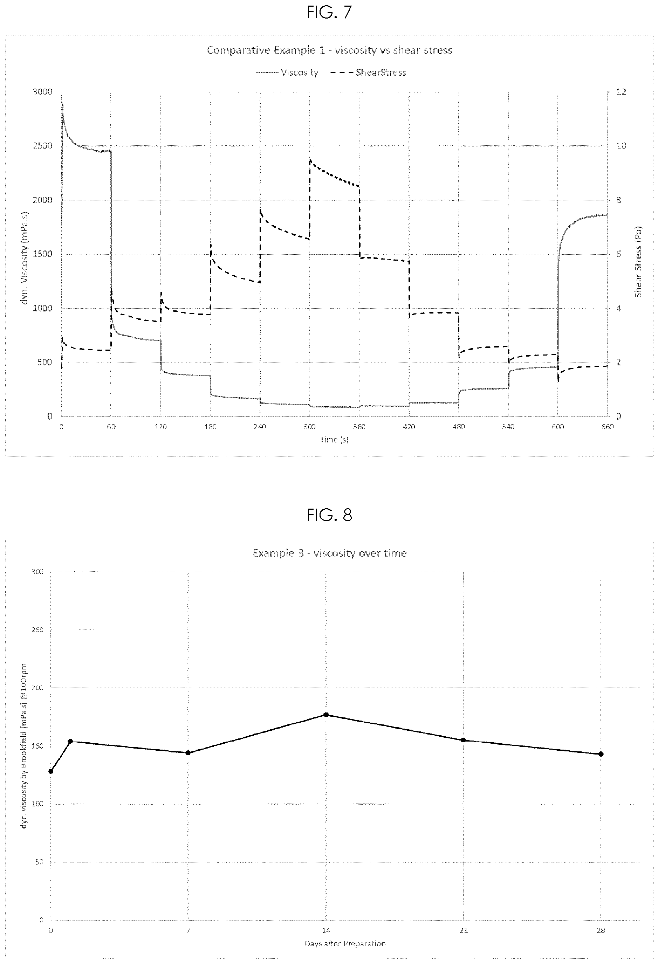

**Figure 7** represents the evolution of viscosity of Comparative Example 1 versus shear stress over time.

In "Comparative Example 1 - viscosity versus shear stress" **Figure 7****,** the dashed curve of shear stress is the result of imposing the shear rate profile, which can be seen in "Comparative Example 1 - viscosity versus shear rate" **Figure 6** on the sample. One can observe that the shear stress does not follows the shear rate proportionally & that for increasing shear rate steps, shear stress is initially higher and requires 10 to 60 sec to reach an app. equilibrium value, while for decreasing shear rate steps, shear stress is initially lower and requires some time to reach an equilibrium state as well, moreover the time to equilibrate is similar to increasing shear rate (10 to 60 sec). The same applies to viscosity. Not only do we note shear thinning behavior, but also time-dependent adaptation effects (thixotropy) - both clearly illustrating a non-Newtonian behavior for the milk of lime according to Comparative Example 1.

**Example 3.** - Preparation of a milk of lime having Newtonian rheology with a viscosity of 128 mPa.s with less than 50% change over the range of 10 to 100 s⁻¹ shear rate and with a production of decantation measured during 28 days of less than 5.0 wt% bottom solid residues (deposits) and of 1.0 vol% clear supernatant (during 28 days).

256 g of the finely milled & filtration-concentrated suspension of Example 2 at 47 wt% are recovered from the filter. Instead of Neomere^{®}tech 646, 7.2 g of Rheosperse 4050 dispersant from Coatex SAS (a subsidiary of Arkema SAS) is added to the suspension under agitation with the said anchor stirrer at 300 rpm during 10 minutes (representing 2.5 wt% of active dispersant) and the solid content is adjusted to 44.8 wt% - as measured by the Sartorius Infrared Thermobalance. The obtained viscosity is 128 mPa.s measured with the same equipment & procedure as above (Example 1 and 2 - Brookfield DV-3 Rheometer at a rotation speed of 100 rpm using spindle 62 and at room temperature of ca. 20 °C).

Viscosity and decantation are monitored weekly on samples stored at rest for 28 days. For the viscosity measurement, the sample is shaken by hand before measurement. It is observed that the viscosity increases slightly over night to ca. 150 mPa.s and remains stable with small variations at this level. The sample for the decantation test is not moved at all & after 28 days only ca. 1.0 vol% in height in clear supernatant over a sample height of ca. 16 cm is noted.

**Figure 8** represents viscosity of Example 3 over time (28 days) at 100 rpm.

The behavior of milk of lime of the present invention according to Example 3 (Fig. 8) is thus quite similar to Example 2, despite of a different dispersant of the polycarboxylate-ether (PCE) type from a different producer.

**Example 4.** - Preparation of a milk of lime having Newtonian rheology with a viscosity of 112 mPa.s with less than 50% change over the range of 10 to 100 s⁻¹ shear rate and with a production of decantation measured during 28 days of less than 5.0 wt% bottom solid residues (deposits) and less than 2.0 vol% clear supernatant (during 28 days).

A milk of lime containing 45.27 wt% of dry solid content of fine lime particles based on weight of the milk of lime, 2.2 wt% ViscoCrete^{®} 3027 dispersant supplied by Sika^{®} (active polycarboxylate polyether comb copolymer as active polymer dispersant) relative to said total dry solid content of said milk of lime, with a particle size distribution with a characteristic diameter d₅₀ of 1.2 µm and d₉₈ of 8.9 µm, is prepared.

The milk of lime is prepared as follows :
To 4000g of tap water 260 g of Viscocrete 3027 dispersant from SIKA GmbH are added & dissolved by gentle agitation. Viscocrete 3027 is a clear solution of a polycarboxylate-ether with a solid content of ca. 20%wt. 3273 g of dry hydrate with a d₅₀ of 9.4 µm and a d₉₈ of 140 µm and a BET surface area of 11.5 m²/g (both measured w the same methods as described in Example 1) is dispersed under agitation by an anchor stirrer for 30 minutes.

The obtained suspension is then first treated with an Ultraturrax T65 equipment for 15 sec to obtain a suspension with a viscosity of 60 mPa.s (as measured with a Brookfield DV-3 Rheometer at a rotation speed of 100 rpm using spindle 62 and at room temperature of ca. 20 °C) and then milled with the Willy A. Bachofen Dynomill 1.4 dm³ laboratory rotary bead mill at a rotor speed of 3600 rpm using 0.8 mm avg diameter zircon oxide beads at a ca. 80%vol filling level (relative to mill chamber free volume) at a feed rate 16d m³/hr, to obtain a fineness of d₅₀ of 1.2 µm and a d₉₈ of 8.9 µm - measured using the same equipment & procedure as described above. The obtained suspension has a solid content of 45.27 wt% as measured by drying weight loss on a Sartorius Infrared Thermobalance at 110°C, until stable weight.

Another 100 g of Viscocrete 3027 dispersant is added to the suspension under agitation with the said anchor stirrer at 300 rpm for 10 minutes. The obtained viscosity is 112 mPa.s - using the same equipment & procedure as above.

Viscosity and decantation are monitored weekly on samples stored at rest for 28 days. For the viscosity measurement, the sample is shaken by hand before measurement. It is observed that the viscosity increases on the first day to 173 mPa.s and stabilizes at ca. 200 mPa.s after ca. 4 weeks. The sample for the decantation test is not moved at all & after 28 days 1.6% in height in clear supernatant over a sample height of ca. 12.3 cm is noted.

The viscosity of this suspension is measured after3 days over a range of shear rates from 1 to 130 s⁻¹ with an Anton-Paar MCR102 Rheometer with a cone & plate geometry. While it is found to decrease with increasing shear rate and shear stress, the reduction is very moderate and for shear rates >10 sec⁻¹ can be considered quasi Newtonian, as the change in viscosity in the range from 10 to 130 sec⁻¹ shear rate is only about 50% of the value at 10 sec⁻¹ shear rate. At 10 sec⁻¹ shear rate the viscosity is ca. 120 mPa.s while for 100 sec⁻¹, the viscosity is 60 mPa.s. As a person knowledgeable-in-the-art will attest, this is only a small difference in viscosity for a concentrated and extremely fine milk-of-lime. For practical purposes, the product can be considered to behave Newtonian.

Again a polymer dispersant from a different suppler than Chryso is used to produce a formulation according to the present invention.

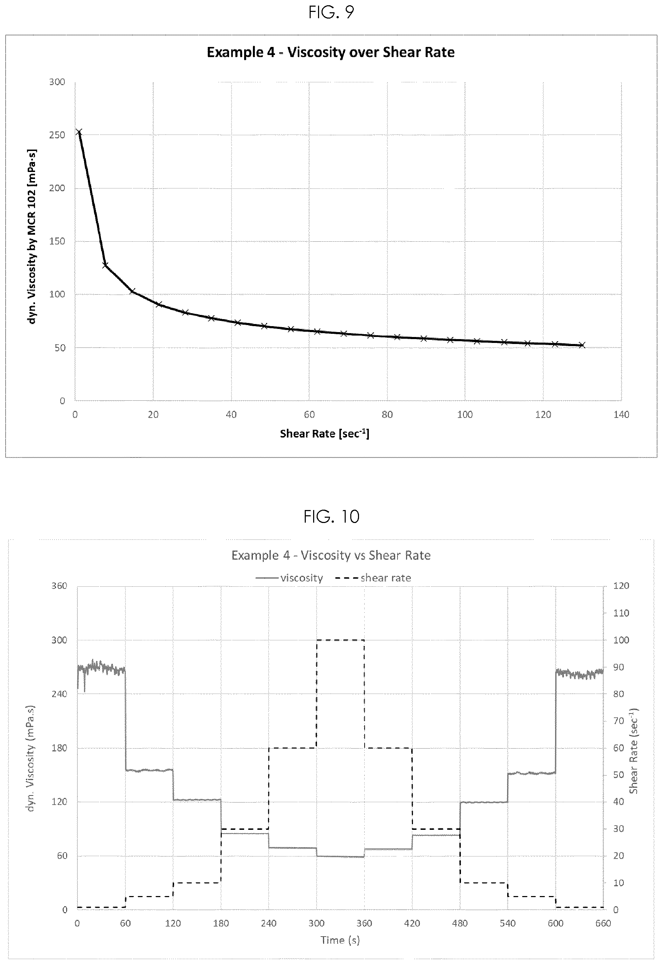

**Figure 9** represents viscosity over Shear Rate of Example 4.

**Figure 10** represents the evolution of viscosity of Example 4 versus shear rate over time.

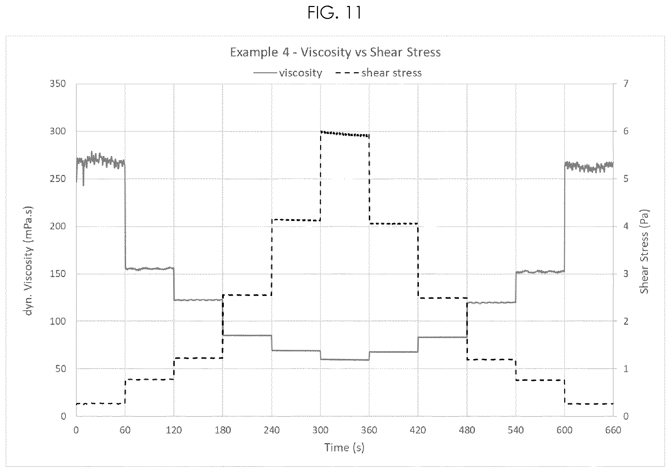

**Figure 11** represents the evolution of viscosity of Example 4 versus shear stress over time.

It should be understood that the present invention is not limited to the described embodiments and that variations can be applied without going outside of the scope of the claims.

## Claims

1. Milk of lime comprising an amount of solid content of fine lime particles higher or equal to 15 wt% based on weight of the milk of lime, in an aqueous phase, said milk of lime comprising at least a polymer dispersant present at an amount of 1.0 to 4.0 wt% of active polymer dispersant relative to said total dry solid content of said milk of lime, wherein said milk of lime produces a decantation measured during 28 days of less than 5 wt% bottom solid residues and less than 2 vol% clear supernatant, and wherein said milk of lime stored at rest presents a Newtonian rheology with a viscosity lower than 200 mPa.s measured with a Brookfield DV-3 Rheometer at a rotation speed of 100 rpm using spindle 62 at room temperature of ca. 20°C and having less or maximally 50% change in viscosity over the range of 10 to 100 s-¹ shear rate measured with an Anton-Paar MCR102 Rheometer with a cup & cylinder geometry.

2. Milk of lime according to claim 1, wherein amount of solid content of fine lime particles is higher or equal to 20 wt% and lower or equal to 70 wt%, in particular higher or equal to 25 wt% and lower or equal to 70 wt%, more particular higher or equal to 30 wt% and lower or equal to 70 wt%, preferably higher or equal to 35 wt% and lower or equal to 65 wt%, preferably higher or equal to 40 wt% and lower or equal to 60 wt%, even more preferably higher or equal to 40 wt% and lower or equal to 55 wt%, advantageously higher or equal to 40 wt% and lower or equal to 50 wt%, for example 41 wt%, 42 wt%, 43 wt%, 44 wt%, 45 wt%, 46 wt%, 47 wt%, 48 wt%, 49 wt%.

3. Milk of lime according to claim 1 or claim 2, wherein said at least one polymer dispersant is a polycarboxylate polyether comb copolymer, preferably the polycarboxylate polyether comb copolymer presents a main chain containing (meth)acrylate units and lateral chains comprising oxyethylene or oxypropylene groups.

4. Milk of lime according to any one of claims 1 to 3, wherein said fine lime particles having a particle size distribution with a characteristic diameter d₅₀ comprised between 1.0 and 3.5 µm as measured by laser diffraction (with a Beckman-Coulter LS13 320 equipment using methanol as carrier solvent and ultrasound sonication pretreatment 4min at 100W), advantageously between 1.0 and 3.4 µm, preferably between 1.0 and 3.3 µm, more preferably between 1.0 and 3.2 µm, even more preferably between 1.0 and 3.1 µm, in particular between 1.0 and 3.0 µm, in particular between 1.0 and 2.9 µm, preferably between 1.0 and 2.8 µm, more preferably between 1.0 and 2.7 µm, even more preferably between 1.0 and 2.6 µm, advantageously between 1.0 and 2.5 µm, more advantageously between 1.0 and 2.4 µm, even more advantageously between 1.0 and 2.3 µm, in particular between 1.0 and 2.2 µm, particularly between 1.0 and 2.1 µm, more particularly between 1.0 and 2.0 µm.

5. Milk of lime according to any one of claims 1 to 4, wherein said fine lime particles having a particle size distribution with a characteristic diameter d₉₈ lower than or equal to 25 µm as measured by laser diffraction (with a Beckman-Coulter LS13 320 equipment using methanol as carrier solvent and ultrasound sonication pretreatment 4min at 100W), preferably lower than or equal to 24 µm, more preferably lower than or equal to 23 µm, in particular lower than or equal to 22 µm, more particular lower than or equal to 21 µm, advantageously lower than or equal to 20 µm, more advantageously lower than or equal to 19 µm, preferably lower than or equal to 18 µm, more preferably lower than or equal to 17 µm, even more preferably lower than or equal to 16 µm, advantageously lower than or equal to 15 µm, more advantageously lower than or equal to 14 µm, even more advantageously lower than or equal to 13 µm, in particular lower than or equal to 12 µm, particularly lower than or equal to 11 µm, more particularly lower than or equal to 10 µm, preferably lower than or equal to 9.5 µm, more preferably lower than or equal to 9.0 µm, in particular lower than or equal to 8.5 µm, lower than or equal to 8.0 µm.

6. Milk of lime according to any one of claims 1 to 5, wherein said fine lime particles have a particle size distribution with a characteristic diameter d₂₅ higher than or equal to 0.4 µm when said characteristic diameter d₅₀ of said fine lime particles of said milk of lime is higher than or equal to 1.0 µm.

7. Process for manufacturing a milk of lime comprising the steps of:
- Milling of lime particles, in suspension in an aqueous phase, said lime particles having an initial particle size distribution with a characteristic diameter d₉₈ lower than or equal to 200 µm, preferably lower than or equal to 150 µm, more preferably lower than or equal to 100 µm, as measured by laser diffraction (with a Beckman-Coulter LS13 320 equipment using ethanol as carrier solvent and ultrasound sonication pretreatment 4min at 100W),
- adding, in said aqueous phase, a first dose of at least a polymer dispersant at an amount of 0.2 to 4.0 wt% of active polymer dispersant based on weight of a solid content of fine lime particles,
- collecting a milk of lime comprising an amount of solid content of fine lime particles higher or equal to 15 wt% based on weight of the milk of lime, said milk of lime producing a decantation measured during 28 days of less than 5 wt% bottom solid residues and less than 2 vol% supernatant, presenting a Newtonian rheology with a viscosity lower than 200 mPa.s measured with a Brookfield DV-3 Rheometer at a rotation speed of 100 rpm using spindle 62 at room temperature of ca. 20°C and having less or maximally 50% change in viscosity over the range of 10 to 100 s-¹ shear rate measured with an Anton-Paar MCR102 Rheometer with a cup & cylinder geometry.

8. Process for manufacturing a milk of lime according to claim 7, wherein said step of adding said first dose of at least a polymer dispersant in said aqueous phase is before said step of milling said lime particles.

9. Process for manufacturing a milk of lime according to claim 7, wherein said step of adding said first dose of at least a polymer dispersant in said aqueous phase is after said step of milling said lime particles.

10. Process for manufacturing a milk of lime according to any one of claims 7 to 9, wherein said step of milling of lime particles, in suspension in an aqueous phase, is to obtain a particle size distribution with a characteristic diameter d₅₀ comprised between 1.0 and 3.5 µm and d₉₈ lower than or equal to 25 µm.

11. Process for manufacturing a milk of lime according to any one of claims 7 to 10, wherein said lime particles are dry hydrate and/or wet slaked quicklime.

12. Process for manufacturing a milk of lime according to claims 7 to 11, comprising an additional step of concentration of said formed milk of lime before said step of collection, preferably by filtration, high pressure filtration, centrifugation, forced and/or accelerated settling.

13. Process for manufacturing a milk of lime according to any one of claims 7 to 12, comprising an additional step of dispersion, in said formed milk of lime, a second dose of at least a polymer dispersant at an amount of 1.0 to 3.8 wt% of active polymer dispersant based on weight of a solid content of fine lime particles, preferably with a combination with mechanical agitation.

14. Process for manufacturing a milk of lime according to claims 7 to 13, wherein said fine lime particles of said formed milk of lime having a particle size distribution with a characteristic diameter d₅₀ comprised between 1.0 and 3.5 µm and d₉₈ lower than or equal to 25 µm.

15. Utilization of said milk of lime according to claims 1 to 6 or said milk of lime manufactured by the process according to claims 7 to 14, for the treatment of water, sludge, neutralization of acid waste, pH adjustment and/or precipitation of solids in chemical and nonferrous metal industries, paper and PCC industries, depolluting acid flue gases, or in the building and agriculture sectors.
